# EUROPEAN PATENT APPLICATION

(11) **EP 4 461 187 A1**
(43) Date of publication of application: **13.11.2024**
(21) Application number: 22918174.8
(22) Date of filing: 02.08.2022
(51) Int. Cl.: A47L 11/40, A47L 11/24, G05D 1/02

(54) **ZONE CLEANING CONTROL METHOD AND APPARATUS FOR CLEANING ROBOT, AND ELECTRONIC DEVICE**

(30) Priority: 04.01.2022 CN 202210005991
(71) Applicant: Beijing Roborock Technology Co., Ltd., Beijing 102206 (CN)
(72) Inventor: LI, Yuxuan, Beijing 102206 (CN)
(74) Representative: Cabinet Beau de Loménie
(86) International application number: PCT/CN2022/109774
(87) International publication number: WO 2023/130718

(57) **Abstract**

A zone cleaning control method and apparatus for a cleaning robot, and a storage medium. The method comprises: in response to an operation request for an initial area, determining at least one element contained in the initial area (S201); determining the element type of the element (S202); according to the element type, calling area configuration information corresponding to the element type (S203); and determining the position and range of a target area according to the area configuration information (S204).

## Description

### CROSS-REFERENCE TO RELATED APPLICATION

This application is based on and claims priority to Chinese Patent Application No. 202210005991.7, filed on January 4, 2022, which is incorporated herein by reference in its entirety.

### TECHNICAL FIELD

The present disclosure relates to the technical field of smart homes, and in particular, to a method and device for controlling regional cleaning of a cleaning robot, a storage medium, and an electronic device.

### BACKGROUND

Following the development of artificial intelligence technologies, the application of smart homes is more and more extensive. Cleaning robots such as a sweeping robot, a sweeping and mopping integrated machine, and a ground mopping machine can help people with household floor cleaning. When using a cleaning robot, a user may control the cleaning robot by using an APP (application) on a terminal (for example, a mobile phone). For example, the user may perform a setting or an operation on the APP to control the cleaning robot to perform timed starting, regional cleaning, or the like.

### SUMMARY OF THE INVENTION

In view of this, the present disclosure provides a method and device for controlling regional cleaning of a cleaning robot, a storage medium, and an electronic device, and mainly aims to improve simplicity, convenience, and rationality of controlling of regional cleaning.

According to one aspect of the present disclosure, a method for controlling regional cleaning of a cleaning robot is provided. The method includes: in response to an operation request for an initial region, determining at least one element included in the initial region; determining an element type of the element; invoking region configuration information corresponding to the element type based on the element type; and determining a location and range of a target region based on the region configuration information.

According to one aspect of the present disclosure, a device for controlling regional cleaning of a cleaning robot is provided. The device includes: a responding unit configured to respond to an operation request for an initial region; an element determining unit configured to determine at least one element included in the initial region, and determine an element type of the element; a configuration invoking unit configured to invoke region configuration information corresponding to the element type based on the element type; and a region dividing unit configured to determine a location and range of a target region based on the region configuration information.

According to one aspect of the present disclosure, a storage medium is provided. The storage medium stores a computer program, wherein the computer program, when run, is configured to perform the above method for controlling regional cleaning of a cleaning robot.

According to one aspect of the present disclosure, an electronic device is provided. The electronic device includes a memory and a processor, wherein the memory stores a computer program; and the processor is configured to run the computer program to perform the above method for controlling regional cleaning of a cleaning robot.

The above description is merely an overview of the technical solutions of the present disclosure. For a better understanding of the technical means in the present disclosure such that they can be implemented according to the content of the Description, and to make the above and other objectives, features and advantages of the present disclosure more obvious and easier to understand, the following describes specific embodiments of the present disclosure.

### BRIEF DESCRIPTION OF THE DRAWINGS

The accompanying drawings described herein are intended to provide further understanding of the present disclosure, and constitute a part of the present disclosure. Example embodiments of the present disclosure and descriptions thereof are intended to describe the present disclosure, but do not constitute inappropriate limitations to the present disclosure. In the accompanying drawings:
FIG. 1 is a schematic diagram of an implementation scenario of a method for controlling regional cleaning of a cleaning robot according to an embodiment of the present disclosure;
FIG. 2 is a flowchart of an example of a method for controlling regional cleaning of a cleaning robot according to an embodiment of the present disclosure;
FIG. 3 is a schematic diagram of a target region according to an embodiment of the present disclosure; and
FIG. 4 is a schematic structural diagram of a device for controlling regional cleaning of a cleaning robot according to an embodiment of the present disclosure.

### DETAILED DESCRIPTION

To make those skilled in the art understand the technical solutions in the present disclosure better, the following describes the technical solutions in the embodiments of the present disclosure clearly and completely with reference to the accompanying drawings in the embodiments of the present disclosure. Apparently, the described embodiments are merely some rather than all of the embodiments of the present disclosure. All other embodiments obtained by those of ordinary skill in the art based on embodiments of the present disclosure without creative efforts shall fall within the protection scope of the present disclosure. It should be noted that, in the case of no conflict, the embodiments and the features thereof in the present disclosure can be combined with each other.

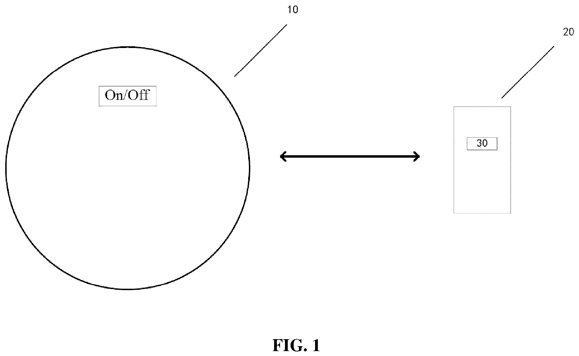

Referring to FIG. 1 which is a schematic diagram of an implementation scenario of a method for controlling regional cleaning of a cleaning robot according to an embodiment of the present disclosure, a cleaning robot 10 and a user terminal 20 are included. For example, the user terminal may be a mobile phone; and an APP 30 for controlling the cleaning robot 10 is installed on the user terminal 20. A user can control the cleaning robot 10 by performing a setting or an operation on the APP 30, for example, setting the cleaning robot to start a cleaning operation at 9 o'clock every morning via timing; or the user performs regional cleaning by selecting a region on a cleaning map, or the like. The method for controlling regional cleaning of a cleaning robot in this embodiment of the present disclosure is mainly implemented on the APP 30. It may be understood that controlling of regional cleaning can be optimized by improving a function of the APP 30.

In an existing solution to controlling of regional cleaning, a user needs to select a to-be-cleaned region on the cleaning map, and manually delimit a size of the region via dragging or in another manner. If the size doesn't fit, manual adjustment is also needed. This series of complex operations greatly wastes user's time and energy, resulting in poor experience of intelligence.

According to the method for controlling regional cleaning of a cleaning robot in this embodiment of the present disclosure, a user needs to only perform a clicking operation on the cleaning map for a target region; and subsequently, a location and range of the region are determined automatically, and the user does not need to manually delimit and adjust a size any more. Moreover, delimiting regions of different sizes based on different element types is introduced to the method for controlling regional cleaning in this embodiment of the present disclosure. For example, a to-be-cleaned region of a larger range is delimited for a heavily stained dining table, so that regions of different extended ranges can be set for different stained regions, bringing a better cleaning effect.

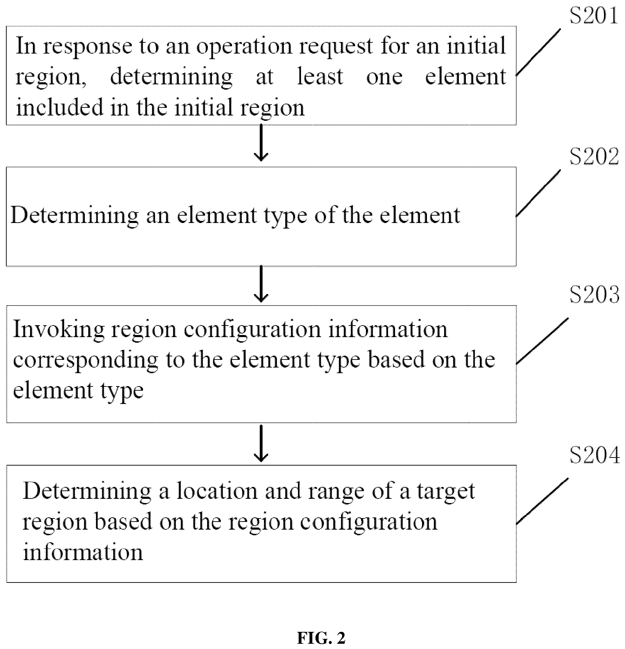

Referring to FIG. 2 which is a flowchart of an example of a method for controlling regional cleaning of a cleaning robot according to an embodiment of the present disclosure, the method for controlling regional cleaning includes steps S201 to S204.

In S201, in response to an operation request for an initial region, at least one element included in the initial region is determined.

When a user performs a clicking operation on a region of a cleaning map for regional cleaning, an APP on a user terminal, in response to the operation request, determines a region for regional cleaning, and sends a regional cleaning instruction to the cleaning robot.

After the APP on the user terminal receives the user's clicking operation request for regional cleaning on the cleaning map, a clicked region on the cleaning map is determined as the initial region. It may be understood that the initial region is a region to which the clicking operation of the user on the cleaning map belongs. For example, the cleaning map includes six functional regions: a living room region, a bedroom region, a kitchen region, a dining room region, a bathroom region, and a balcony region. Assuming that the user performs the clicking operation on the living room region for regional cleaning, the entire living room region may be used as the initial region. For another example, the user performs the clicking operation on the dining room region for regional cleaning, the entire dining room region is used as the initial region. The same is true for other regions. Alternatively, only a certain range of a region on which the user performs the clicking operation is used as the initial region. For example, if the user performs the clicking operation on a sofa region of the living room region, only a region in a certain range around the sofa (for example, 0.5 meter around the sofa) is used as the initial region.

After the initial region is determined, at least one element included in the initial region needs to be determined. The element refers to furniture or a household supply, for example, a sofa, a bed, a TV cabinet, a bookcase, a tea table, a floor lamp, a desk, a dining table, a dining chair, a shoe cabinet, a water dispenser, a refrigerator, a washing machine, a dishwasher, a humidifier, an air purifier, a toy, a carton, a trash can, and the like, which are not enumerated herein.

In S202, an element type of the element is determined.

Floors around different elements often have different stain levels. Generally, different regions have different stain levels. One region may include a plurality of elements having different stain levels. For example, the dining room region usually has more garbage or stains than the living room region. For another example, for the living room region, less garbage or few stains are generated around a TV cabinet, but there tends to be more scraps of paper and peel garbage around a tea table. For another example, for a children's region, there is more fragmental garbage around a children's table and chair, while a region around a bookcase is cleaner.

Therefore, types of elements may be classified according to their usage and stain levels into the following types: a heavy stain type, a medium stain type, and a light stain type. It may be understood that in addition to the three levels of element types, elements may be classified into more types, for example, a first-level stain type, a second-level stain type, a third-level stain type, a fourth-level stain type, and the like. This embodiment of the present disclosure is illustratively described by using only the three levels of element types: the heavy stain type, the medium stain type, and the light stain type.

As analyzed above, elements in a region (for example, elements in the dining room region) may have heavy stains; and different elements in a region (for example, a TV cabinet and a tea table in a living room) may have different levels of stains. Therefore, in a classifying manner, all elements in a region may be classified into stain types of a same level. For example, elements such as a dining table, a dining chair, and a sideboard in a dining room are all classified into the heavy stain type. In another classifying manner, elements are classified into types according to specific usage of the elements. For example, in a living room, a TV cabinet is set to the light stain type; a sofa is set to the medium stain type; and a tea table is set to the heavy stain type. In other words, one region may have elements of different types.

In S203, region configuration information corresponding to the element type is invoked based on the element type.

As analyzed above, different element types correspond to different stain levels. There is more garbage or stains around an element of the heavy stain type. Therefore, a cleaning range around the element needs to be extended appropriately. However, for an element of the light stain type, a cleaning range around the element may be reduced appropriately.

Therefore, during pre-configuration of region configuration information corresponding to each element, target regions having different extended ranges are configured for element types of different stain levels. Specifically, a pre-determined length of extension is determined based on the element type (the heavy stain type, the medium stain type, or the light stain type) by taking a location of the element as a center, so as to determine a range of the target region. For example, for an element that is a dining table, because the element belongs to the heavy stain type, a location of the dining table may be taken as a center, and a target region is delimited by extending outwards from an outer edge of the dining table by 50 cm. For another example, for an element that is a TV cabinet, because the element belongs to the light stain type, a location of the TV cabinet may be taken as a center, and a target region is delimited by extending outwards from an outer edge of the TV cabinet by 20 cm. It can be learned that regions of different extension lengths are delimited for elements of different stain levels. Generally, an extension length for an element type having a heavy stain (a high level) is relatively large. In other words, a pre-determined length of extension corresponding to an element of a high stain level is greater than a pre-determined length of extension corresponding to an element of a low stain level. Therefore, for a heavily stained element, a range of a target region is extended appropriately, so that the cleaning robot can extend a cleaning area, thereby achieving a good cleaning effect.

In S204, a location and range of a target region are determined based on the region configuration information.

The region configuration information is information about the target region and corresponding to the element type. For example, the region configuration information includes location information of the element, information about a pre-determined length of extension from an outer edge of the element by taking the element as a center, and the like. A location of the element as well as the information about the pre-determined length of extension from the outer edge of the element by taking the element as the center may be determined by matching the region configuration information corresponding to the element type. In this case, a process of determining the location and range of the target region is delimiting a region by extending from the outer edge of the element by the pre-determined length by taking the location of the element as the center, wherein the delimited region is the target region.

For example, the user performs a clicking operation for regional cleaning on a living room region of a cleaning map on the APP. As described above, the entire living room region may be used as the initial region; or a region in a certain range of the clicking operation may be used as the initial region. For the first case, if the entire living room region is used as the initial region, types of all elements in the living room region need to be determined, corresponding region configuration information matched to each type is provided, a target region corresponding to each element is delimited, and the cleaning robot is instructed to perform cleaning in each target region. For example, if a living room includes three elements: a TV cabinet, a sofa, and a tea table, target regions corresponding to the three elements need to be cleaned. For the second case, if the region in the certain range of the clicking operation is used as the initial region, target region delimitation and cleaning need to be performed only on elements in the region in this small range. For example, if the user performs the clicking operation on a sofa (or a region around the sofa), only the region around the sofa is used as the initial region. In this case, the initial region includes only one element, namely, the sofa. Therefore, type determining and region configuration information matching need to be performed only on the element, namely, the sofa, thereby determining a target region corresponding to the sofa. In the second case, performing targeted cleaning on a region in a small range of the user's clicking operation is a recommended manner. The following uses the second case as an example for description.

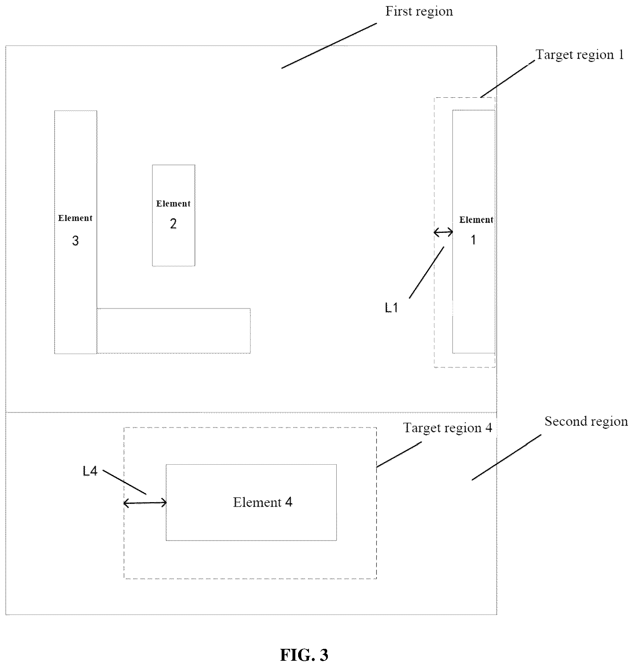

Referring to FIG. 3 which is a schematic diagram of target region delimitation, two functional regions are shown in the figure: a first region and a second region, wherein the first region includes three elements: an element 1, an element 2, and an element 3. It is assumed that the second region includes one element: an element 4. It is assumed that the user clicks the element 1 (or a location around the element 1) on the cleaning map for regional cleaning, and that a type of the element 1 is determined to be the light stain type. In this case, if a pre-determined length of extension from an outer edge of the element 1 is determined as L1 based on region configuration information of the element 1, a target region of the element 1 is delimited as follows: the element 1 is taken as a center, and a range obtained by extending from the outer edge of the element 1 in all unblocked directions by L1 is used as a final target region 1 (in FIG. 3, that is a region in a dashed-line box taking the element 1 as the center). It is further assumed that the user clicks the element 4 (or a location around the element 4) on the cleaning map for regional cleaning, and that a type of the element 4 is determined to be the heavy stain type. In this case, if a pre-determined length of extension from an outer edge of the element 4 is determined as L4 based on region configuration information of the element 4, a target region of the element 1 is delimited as follows: the element 4 is taken as a center, and a range obtained by extending from the outer edge of the element 4 in all unblocked directions by L4 is used as a final target region 4 (in FIG. 3, that is a region in a dashed-line box taking the element 4 as the center). It may be understood that in the above two examples, because the stain level corresponding to the element 4 is greater than the stain level corresponding to the element 1, L4 is greater than L1. Therefore, a cleaning range of a region having the element 4 is extended.

After determining the target region, the APP may send a regional cleaning instruction to the cleaning robot to instruct the cleaning robot to clean the target region. For example, the cleaning robot is instructed to first travel to a central location of the target region and then start to perform a cleaning operation, or is instructed to start to perform a cleaning operation as soon as the cleaning robot travels into the target region and completely clean the target region, or is instructed to first travel to a location in the target region and nearest to a current location, then start to perform a cleaning operation, and completely clean the target region.

In an implementation, in addition to the location of the element and the information about the pre-determined length of extension from the outer edge, the region configuration information may further include information about a cleaning mode corresponding to the element type. For example, it is set that an element of the heavy stain type corresponds to a deep cleaning mode, an element of the medium stain type corresponds to a conventional cleaning mode, and an element of the light stain type corresponds to a fast cleaning mode. When sending the regional cleaning instruction to the cleaning robot, the APP also sends the information about the cleaning mode to the cleaning robot, thereby controlling the cleaning robot to use a corresponding cleaning mode for cleaning of the target region.

According to the method for controlling regional cleaning of a cleaning robot in this embodiment of the present disclosure, target regions of different ranges can be delimited for different element types by providing the corresponding region configuration information matched to the element types. For example, for an element of the heavy stain type, a cleaning range around the element is extended appropriately, so that cleaning is performed in a more targeted and thorough manner. Moreover, the above element type determining, region configuration information matching, and target region delimitation are completed automatically without user's intervention and selection, thereby freeing the user and improving accuracy of delimitation. In an implementation, a different cleaning mode may alternatively be selected based on the element type, so that cleaning is performed in a more targeted manner, and a better cleaning effect is achieved.

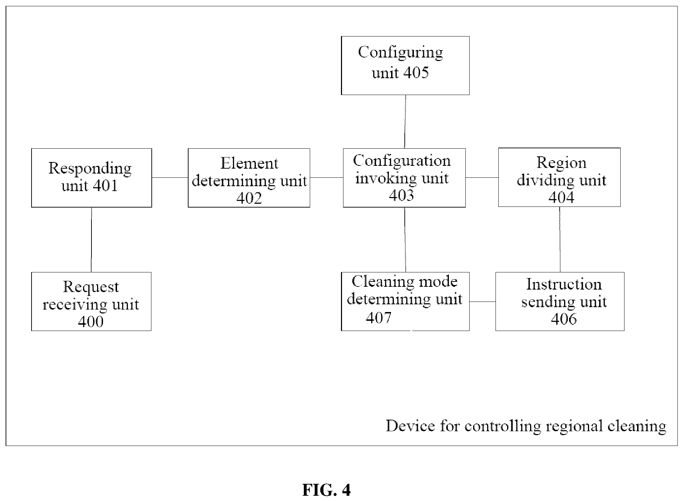

Referring to FIG. 4 which is a schematic structural diagram of a device for controlling regional cleaning of a cleaning robot according to an embodiment of the present disclosure, the device for controlling regional cleaning includes:
a responding unit 401 configured to respond to an operation request for an initial region;
an element determining unit 402 configured to determine at least one element included in the initial region, and determine an element type of the element;
a configuration invoking unit 403 configured to invoke region configuration information corresponding to the element type based on the element type; and
a region dividing unit 404 configured to determine a location and range of a target region based on the region configuration information.

In an implementation, the device further includes:
a request receiving unit 400 configured to receive the user's clicking operation request for regional cleaning on a cleaning map, wherein a clicked region on the cleaning map is determined as the initial region.

In an implementation, the element includes furniture or a supply.

The device further includes: a configuring unit 405 configured to pre-configure region configuration information corresponding to each type of elements, wherein target regions having different ranges are configured for different types of elements.

In an implementation, the region dividing unit 404 is configured to determine a location of the element based on the region configuration information, and determine the target region by extending by a region of a pre-determined length from an unblocked outer edge by taking the location of the element as a center, wherein the pre-determined length is pre-configured in the region configuration information based on the element type.

In an implementation, the pre-configured region configuration information corresponding to each type of elements further includes: a stain level corresponding to each type of elements, wherein a pre-determined length corresponding to an element of a high stain level is greater than a pre-determined length corresponding to an element of a low stain level.

In an implementation, the device further includes:
an instruction sending unit 406 configured to send a regional cleaning instruction to a cleaning robot to instruct the cleaning robot to clean the target region.

In an implementation, the instruction sending unit 406 is configured to instruct the cleaning robot to first travel to a central location of the target region and then start to perform a cleaning operation; or instruct the cleaning robot to start to perform a cleaning operation as soon as the cleaning robot travels into the target region; or instruct the cleaning robot to first travel to a location in the target region and nearest to a current location and then start to perform a cleaning operation.

In an implementation, the region configuration information further includes a cleaning mode corresponding to the element type; and
the device further includes:
a cleaning mode determining unit 407 configured to determine the cleaning mode corresponding to the element type based on the region configuration information, and send an instruction to the cleaning robot through the instruction sending unit 406 to control the cleaning robot to use the corresponding cleaning mode for cleaning of the target region.

An embodiment of the present disclosure further provides a storage medium. The storage medium stores a computer program, wherein, the computer program, when run, is configured to perform the steps in any of the above method embodiments.

In some embodiments of the present disclosure, the storage medium may be configured to store a computer program used for performing the following steps:
(1) in response to an operation request for an initial region, determining at least one element included in the initial region;
(2) determining an element type of the element;
(3) invoking region configuration information corresponding to the element type based on the element type; and
(4) determining a location and range of a target region based on the region configuration information.

In some embodiments of the present disclosure, the above storage medium may include but is not limited to: any medium that can store a computer program, such as a USB flash drive, a read-only memory (ROM), a random access memory (RAM), a mobile hard disk, a magnetic disk, or an optical disc.

An embodiment of the present disclosure further provides an electronic device. The electronic device includes a memory and a processor. The memory stores a computer program. The processor is configured to run the computer program to perform the steps in any of the above method embodiments.

In some embodiments of the present disclosure, the electronic device may further include a transmission apparatus and an input/output apparatus, wherein the transmission apparatus and the input/output apparatus are connected to the processor.

In some embodiments of the present disclosure, the processor may be configured to perform the following steps through the computer program:
(1) in response to an operation request for an initial region, determining at least one element included in the initial region;
(2) determining an element type of the element;
(3) invoking region configuration information corresponding to the element type based on the element type; and
(4) determining a location and range of a target region based on the region configuration information.

For a specific example in this embodiment, refer to the examples described in the above embodiments and optional implementations. Details are not repeated in this embodiment herein.

The serial numbers of the above embodiments of the present disclosure are merely for description, and do not represent the superiority or inferiority of the embodiments.

In the above embodiments of the present disclosure, the descriptions of the embodiments have respective focuses. For a part that is not described in detail in an embodiment, refer to the related description of the other embodiments.

In the embodiments of the present disclosure, it should be understood that the disclosed technical content may be implemented in other manners. The device embodiments described above are merely schematic. For example, the unit division is merely logical function division. There may be another division manner in actual implementation. For example, a plurality of units or assemblies may be combined or integrated into another system, or some features may be ignored or not performed. In addition, the displayed or discussed mutual couplings or direct couplings or communication connections may be implemented by using some interfaces. The indirect couplings or communication connections between the units or modules may be implemented electronically or in another form.

The units described as separate components may or may not be physically separate, and components displayed as units may or may not be physical units, may be located in one place, or may be distributed on a plurality of network units. Some or all of the units may be selected based on actual requirements to achieve the objectives of the solutions in the embodiments.

In addition, all functional units in the respective embodiments of the present disclosure may be integrated into one processing unit, or each of the units may exist physically independently, or two or more units may be integrated into one unit. The above integrated unit may be implemented in a form of hardware or a software functional unit.

The integrated unit, if implemented in the form of a software functional unit and sold or used as an independent product, may be stored in a computer-readable storage medium. Based on such understanding, the technical solutions of the present disclosure essentially, or a part contributing to the prior art, or some or all of the technical solutions may be embodied in a form of a software product. The computer software product is stored in a storage medium, and includes a plurality of instructions for a computer device (which may be a personal computer, a server, a network device or the like) to perform some or all of the steps of the methods described in embodiments of the present disclosure. The above storage medium includes: any medium that can store program code, such as a USB flash drive, a read-only memory (ROM), a random access memory (RAM), a mobile hard disk, a magnetic disk, or an optical disc.

The above descriptions are merely preferred implementations of the present disclosure. It should be noted that those skilled in the art may also make several improvements and modifications without departing from the principle of the present disclosure, and these improvements and modifications shall also be included into the protection scope of the present disclosure.

## Claims

1. A method for controlling regional cleaning of a cleaning robot, comprising:
in response to an operation request for an initial region, determining at least one element comprised in the initial region;
determining an element type of the element;
invoking, based on the element type, region configuration information corresponding to the element type; and
determining a location and range of a target region based on the region configuration information.

2. The method according to claim 1, wherein before in response to the operation request for the initial region, the method further comprises:
receiving a user's clicking operation request for regional cleaning on a cleaning map; and
determining a clicked region on the cleaning map as the initial region.

3. The method according to claim 1, wherein:
the element comprises furniture or a supply; and
the method further comprises: pre-configuring region configuration information corresponding to each type of elements, wherein target regions with different extended ranges are configured for different types of elements.

4. The method according to claim 3, wherein determining the location and range of the target region based on the region configuration information comprises:
determining a location of the element based on the region configuration information; and
determining the target region by extending by a region of a pre-determined length from an unblocked outer edge by taking the location of the element as a center, wherein the pre-determined length is pre-configured, based on the element type, in the region configuration information.

5. The method according to claim 4, wherein:
the pre-configured region configuration information corresponding to each type of elements further comprises: a stain level corresponding to each type of elements, and
a pre-determined length corresponding to an element of a high stain level is greater than a pre-determined length corresponding to an element of a low stain level.

6. The method according to claim 1, wherein after determining the location and range of the target region, the method further comprises:
sending a regional cleaning instruction to the cleaning robot to instruct the cleaning robot to clean the target region.

7. The method according to claim 6, wherein sending the regional cleaning instruction to the cleaning robot to instruct the cleaning robot to clean the target region comprises:
instructing the cleaning robot to first travel to a central location of the target region and then start to perform a cleaning operation; or
instructing the cleaning robot to travel to the target region and start to perform the cleaning operation; or
instructing the cleaning robot to first travel to a location in the target region that is nearest to a current location where the cleaning robot is located and then start to perform the cleaning operation.

8. The method according to claim 1, wherein the region configuration information further comprises a cleaning mode corresponding to the element type; and
the method further comprises:
determining, based on the region configuration information, the cleaning mode corresponding to the element type; and
controlling the cleaning robot to use the corresponding cleaning mode to clean the target region.

9. A device for controlling regional cleaning of a cleaning robot, comprising:
a responding unit configured to respond to an operation request for an initial region;
an element determining unit configured to determine at least one element comprised in the initial region, and determine an element type of the element;
a configuration invoking unit configured to invoke, based on the element type, region configuration information corresponding to the element type; and
a region dividing unit configured to determine a location and range of a target region based on the region configuration information.

10. The device according to claim 9, further comprising:
a request receiving unit configured to receive a user's clicking operation request for regional cleaning on a cleaning map, wherein a clicked region on the cleaning map is determined as the initial region.

11. The device according to claim 9, wherein the element comprises furniture or a supply; and
the device further comprises: a configuring unit configured to pre-configure region configuration information corresponding to each type of elements, wherein target regions with different extended ranges are configured for different types of elements.

12. The device according to claim 9, wherein the region dividing unit is configured to determine a location of the element based on the region configuration information, and determine the target region by extending by a region of a pre-determined length from an unblocked outer edge by taking the location of the element as a center, wherein the pre-determined length is pre-configured, based on the element type, in the region configuration information.

13. The device according to claim 12, wherein the pre-configured region configuration information corresponding to each type of elements further comprises: a stain level corresponding to each type of elements, and wherein a pre-determined length corresponding to an element of a high stain level is greater than a pre-determined length corresponding to an element of a low stain level.

14. The device according to claim 9, further comprising:
an instruction sending unit configured to send a regional cleaning instruction to the cleaning robot to instruct the cleaning robot to clean the target region.

15. The device according to claim 14, wherein the instruction sending unit is configured to instruct the cleaning robot to first travel to a central location of the target region and then start to perform a cleaning operation; or instruct the cleaning robot to travel to the target region and start to perform the cleaning operation; or instruct the cleaning robot to first travel to a location in the target region that is nearest to a current location where the cleaning robot is located and then start to perform the cleaning operation.

16. The device according to claim 9, wherein the region configuration information further comprises a cleaning mode corresponding to the element type; and
the device further comprises:
a cleaning mode determining unit configured to determine, based on the region configuration information, the cleaning mode corresponding to the element type, and send an instruction to the cleaning robot through the instruction sending unit to control the cleaning robot to use the corresponding cleaning mode to clean the target region.

17. A non-transitory storage medium having a computer program stored thereon, wherein the computer program is configured to perform the method according to any one of claims 1 to 8 when running.

18. An electronic device, comprising a memory and a processor, wherein a computer program is stored in the memory; and the processor is configured to run the computer program to perform the following steps:
in response to an operation request for an initial region, determining at least one element comprised in the initial region;
determining an element type of the element;
invoking, based on the element type, region configuration information corresponding to the element type; and
determining a location and range of a target region based on the region configuration information.

19. The electronic device according to claim 18, wherein the processor is further configured to run the computer program to perform the following step:
receiving a user's clicking operation request for regional cleaning on a cleaning map; and
determining a clicked region on the cleaning map as the initial region.

20. The electronic device according to claim 18, wherein the element comprises furniture or a supply; and
the processor is further configured to run the computer program to perform the following step:
pre-configuring region configuration information corresponding to each type of elements, wherein target regions with different extended ranges are configured for different types of elements.

21. The electronic device according to claim 20, wherein the processor is further configured to run the computer program to perform the following steps:
determining a location of the element based on the region configuration information; and
determining the target region by extending by a region of a pre-determined length from an unblocked outer edge by taking the location of the element as a center, wherein the pre-determined length is pre-configured, based on the element type, in the region configuration information.

22. The electronic device according to claim 21, wherein
the pre-configured region configuration information corresponding to each type of elements further comprises: a stain level corresponding to each type of elements, and
a pre-determined length corresponding to an element of a high stain level is greater than a pre-determined length corresponding to an element of a low stain level.

23. The electronic device according to claim 18, wherein the processor is further configured to run the computer program to perform the following step:
sending a regional cleaning instruction to the cleaning robot to instruct the cleaning robot to clean the target region.

24. The electronic device according to claim 23, wherein the processor is further configured to run the computer program to perform the following step:
instructing the cleaning robot to first travel to a central location of the target region and then start to perform a cleaning operation; or
instructing the cleaning robot to travel to the target region and start to perform the cleaning operation; or
instructing the cleaning robot to first travel to a location in the target region that is nearest to a current location where the cleaning robot is located and then start to perform the cleaning operation.

25. The electronic device according to claim 18, wherein the region configuration information further comprises a cleaning mode corresponding to the element type; and
the processor is further configured to run the computer program to perform the following steps:
determining, based on the region configuration information, the cleaning mode corresponding to the element type; and
controlling the cleaning robot to use the corresponding cleaning mode to clean the target region.
